(19) Europäisches Patentamt
European Patent Office
Office européen des brevets

(11) **EP 3 865 908 B1**

(12) **EUROPEAN PATENT SPECIFICATION**

(45) Date of publication and mention
of the grant of the patent:
**28.12.2022 Bulletin 2022/52**

(21) Application number: **20176890.0**

(22) Date of filing: **27.05.2020**

(51) International Patent Classification (IPC):
**G01S 13/90** (2006.01)    **G01S 7/40** (2006.01)

(52) Cooperative Patent Classification (CPC):
**G01S 13/9058; G01S 7/40**

(54) **BISTATIC SAR PHASE SYNCHRONIZATION SIGNAL PROCESSING METHOD AND DEVICE**

VERFAHREN UND VORRICHTUNG ZUR VERARBEITUNG EINES BISTATISCHEN
SAR-PHASEN-SYNCHRONISIERUNGSSIGNALS

PROCÉDÉ ET DISPOSITIF DE TRAITEMENT DE SIGNAL DE SYNCHRONISATION DE PHASE SAR
BISTATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.02.2020 CN 202010089336**

(43) Date of publication of application:
**18.08.2021 Bulletin 2021/33**

(73) Proprietor: **Institute of Electronics, Chinese
Academy of
Sciences
Beijing 100190 (CN)**

(72) Inventors:
• **WANG, Yu
Beijing 100190 (CN)**
• **LIN, Haoyu
Beijing 100190 (CN)**
• **LIANG, Da
Beijing 100190 (CN)**

• **Zhang, Heng
Beijing 100190 (CN)**
• **LIU, Kaiyu
Beijing 100190 (CN)**
• **CHEN, Yafeng
Beijing 100190 (CN)**
• **LIU, Dacheng
Beijing 100190 (CN)**
• **DENG, Yunkai
Beijing 100190 (CN)**

(74) Representative: **Brevalex
95, rue d'Amsterdam
75378 Paris Cedex 8 (FR)**

(56) References cited:
EP-A2- 1 426 785    CN-A- 109 917 388
CN-A- 110 488 285    US-A1- 2005 083 225
US-A1- 2018 313 951    US-A1- 2019 285 742

## Description

### TECHNICAL FIELD

The disclosure relates to the technical field of radars, and particularly relates to a Bistatic Synthetic Aperture Radar (BiSAR) phase synchronization signal processing method and device.

### BACKGROUND

The SAR is an active microwave imaging radar which has the characteristics of all-time and all-weather work, and has unique advantages in applications, such as environmental protection, disaster monitoring, marine observation, resource exploration and military reconnaissance. A Bistatic SAR system is a novel radar system. Radars are mounted on two satellites flying in formation to form a bistatic radar system to together complete tasks such as high-resolution imaging of large surveying and mapping areas, ground elevation measurement, ocean current velocity measurement, ground moving target monitoring, and the like. The Bistatic SAR system is implemented by transmitting signals through a master satellite and simultaneously receiving the signals through a slave satellite. In related technologies, the working mode of the bistatic radar system is that after the master satellite transmits a radar signal, a synchronization signal is transmitted. Due to different time sequences of transmission of the two signals and different carrier frequencies, the design complexity of the radar system is increased, and the phase compensation accuracy is not high. Related technologies are known from US2019/285742 A1, US2018/313951 A1 and CN110488285 A.

### SUMMARY

The invention is set out in the appended set of claims.

The embodiments of the present specification provide a Bistatic SAR phase synchronization signal processing method and device. At the same time a first radar transmits a radar signal and a first phase synchronization signal with the same carrier frequency, thereby reducing the opening time of a signal receiving window, and simplifying the design complexity of a radar system. Furthermore, the first radar receives a second phase synchronization signal, which has a same carrier frequency as the first phase synchronization signal, transmitted by a second radar, and then, the phase synchronization signal and the radar signal received by the first radar and the second radar have the same carrier frequency, so that there is no need to perform scale transformation on the received phase synchronization signal and then perform phase compensation, and the phase compensation result is more accurate.

## BRIEF DESCRIPTION OF THE DRAWINGS

FIG. 1 is a flowchart of a Bistatic SAR phase synchronization signal processing method provided by some embodiments of the present specification.

FIG. 2 is a schematic diagram of generation of a radar signal and a phase synchronization signal according to some embodiments of the present specification.

FIG. 3 is another flowchart of implementation of a Bistatic SAR phase synchronization signal processing method according to some embodiments of the present specification.

FIG. 4 is another flowchart of implementation of a Bistatic SAR phase synchronization signal processing method according to some embodiments of the present specification.

FIG. 5 is another flowchart of implementation of a Bistatic SAR phase synchronization signal processing method based on carrier frequency signals according to some embodiments of the present specification.

FIG. 6 is a time sequence diagram of transmitting and receiving signals by a first radar and a second radar according to some embodiments of the present specification.

FIG. 7 is a flowchart of a phase compensation algorithm according to some embodiments of the present specification.

FIG. 8 is a structural schematic diagram of a Bistatic SAR phase synchronization signal processing device according to some embodiments of the present specification.

FIG. 9 is a schematic diagram of composition structures of the radar according to some embodiments of the present specification.

## DETAILED DESCRIPTION

It should be understood that the specific embodiments described herein are merely configured to illustrate the present specification, but are not intended to limit the present specification.

In the subsequent description, the use of suffixes, such as "modules", "components" or "units" for representing elements is only favorable for the description of the present specification, and has no specific meaning. Therefore, "modules", "components" or "units" may be used in a mixed manner.

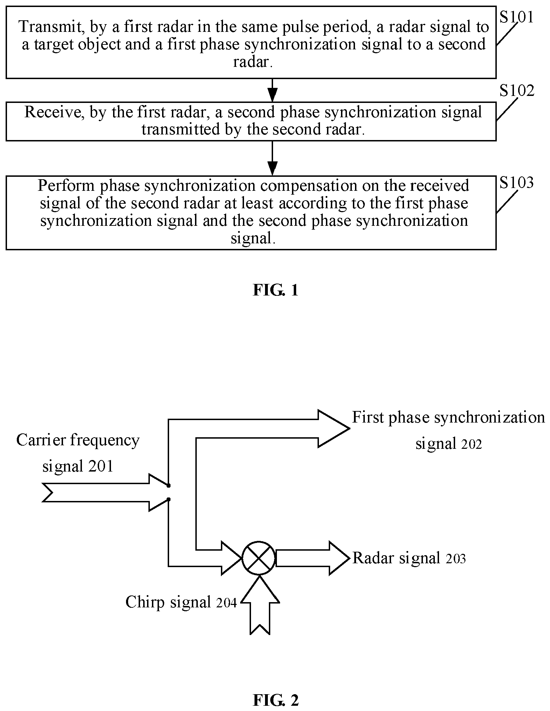

Some embodiments of the present specification provide a Bistatic SAR phase synchronization signal processing method based on carrier frequency signals. FIG. 1 shows a flowchart of a Bistatic SAR phase synchronization signal processing method based on carrier frequency signals according to some embodiments of the present specification. As shown in FIG. 1, the Bistatic SAR phase synchronization signal processing method based on carrier frequency signals includes the following operations:

S101: Transmitting, by a first radar a radar signal to a target object and a first phase synchronization signal to a second radar.

Here, the carrier frequency of the radar signal is the same as that of the first phase synchronization signal. In a Bistatic SAR system, the first radar is a master satellite, and the second radar is a slave satellite. In a first time sequence of the first pulse repetition time, the first radar is responsible for transmitting a radar signal to a target object, and transmitting a first phase synchronization signal to the second radar in the same pulse period. In some embodiments, a plurality of second radars may be disposed in the Bistatic SAR system. In a second time sequence of the first pulse repetition time, the first radar receives an echo signal reflected by the radar signal, and the second radar receives the echo signal and the first phase synchronization signal.

The radar signal and the first phase synchronization signal are the same carrier frequency signals which are transmitted by the first radar at the same time in two paths, wherein one path of the carrier frequency signal is mixed with a chirp signal to generate the radar signal, and the other path of the carrier frequency signal directly generates the first phase synchronization signal. FIG. 2 shows a schematic diagram of generation of a radar signal and a phase synchronization signal a some embodiments of the present specification. As shown in FIG. 2, 201 is a carrier frequency signal, 202 is a first phase synchronization signal directly generated by the carrier frequency signal 201, and 203 is a radar signal transmitted by a first radar, obtained by mixing the carrier frequency signal 201 and a chirp signal 204. In the first pulse repetition time, the first radar receives and stores an echo signal reflected by the radar signal to obtain a received signal of the first radar; and the second radar receives and stores the echo signal and the first phase synchronization signal to obtain a received signal of the second radar. In some embodiments, the second radar may not receive the first phase synchronization signal, and the second radar only stores the echo signal to obtain a received signal of the second radar.

S102: A second phase synchronization signal transmitted by the second radar is received by the first radar.

Here, the carrier frequency of the second phase synchronization signal is the same as the carrier frequency of the first phase synchronization signal. After the second radar receives the first phase synchronization signal transmitted by the first radar, in a first time sequence of the second pulse repetition time, the second radar transmits a second phase synchronization signal to the first radar, and the first radar transmits a radar signal to a target object. In a second time sequence of the second pulse repetition time, the first radar receives and stores an echo signal reflected by the radar signal and the second phase synchronization signal to obtain a received signal of the first radar; and the second radar receives and stores the echo signal reflected by the radar signal to obtain a received signal of the second radar. In some embodiments, the first radar may not receive the second phase synchronization signal, and the first radar only stores the echo signal to obtain a received signal of the first radar.

S103: Phase synchronization compensation is performed on the received signal of the second radar at least according to the first phase synchronization signal and the second phase synchronization signal.

Here, phase adjustment is performed on the received signal of the first radar and the received signal of the second radar, the received signal of the first radar at least including the second phase synchronization signal, and the received signal of the second radar at least including the first phase synchronization signal. Phase synchronization compensation is performed on the received signal of the second radar according to the compensation phase obtained by phase adjustment.

In some embodiments, in different time sequences, phase compensation is performed on received signals of radars receiving phase synchronization signals. For example, in the first time sequence, the second radar receives a phase synchronization signal, and then, phase synchronization compensation is performed on the received signal of the second radar; and in the second time sequence, the first radar receives a phase synchronization signal, and then, phase synchronization compensation is performed on the received signal of the first radar.

In the embodiments of the present specification, the first radar transmits a radar signal and a first phase synchronization signal with the same carrier frequency, thereby reducing the opening time of a signal receiving window, and simplifying the design complexity of a radar system. Furthermore, the first radar receives a second phase synchronization signal, which has a same carrier frequency as the first phase synchronization signal, transmitted by the second radar, and then, the phase synchronization signal and the radar signal received by the first radar and the second radar have the same carrier frequency, so that there is no need to perform scale transformation on the received phase synchronization signal and then perform phase compensation, and the phase compensation result is more accurate.

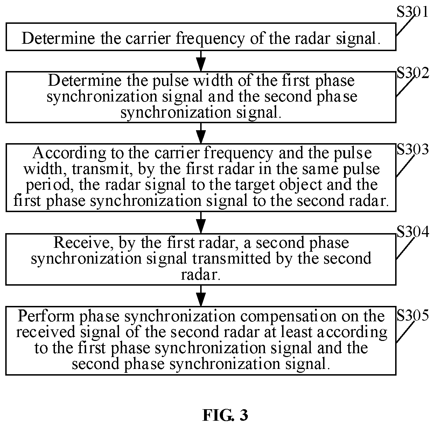

Some embodiments of the present specification provide a Bistatic SAR phase synchronization signal processing method based on carrier frequency signals. FIG. 3 shows another flowchart of implementation of a Bistatic SAR phase synchronization signal processing method based on carrier frequency signals according to some embodiments of the present specification. As shown in FIG. 3, the Bistatic SAR phase synchronization signal processing method based on carrier frequency signals includes the following operations:

S301: The carrier frequency of the radar signal is determined.

Here, the carrier frequency of the radar signal may be determined according to the parameters of the radar signal, wherein the carrier frequency of the radar signal is the same as the carrier frequency of the first phase synchronization signal and the carrier frequency of the second phase synchronization signal.

S302: The pulse width of the first phase synchronization signal and the second phase synchronization signal are determined.

Here, the pulse width is the pulse duration, and the unit is generally $\mu$s. If the distance between the first radar and the second radar is far, in order to increase the strength of the echo signal, a wider pulse width needs to be adopted. If the distance between the first radar and the second radar is close, a narrower pulse width may be adopted. Since the starting time of the second phase synchronization signal is between two adjacent times of transmitting radar signals, in order to ensure that both the first radar and the second radar can receive the phase synchronization signals transmitted by the other party, the pulse widths of the phase synchronization signals need to be determined according to the pulse repetition time, the free duration in each pulse repetition time, and the distance between the first radar and the second radar. In some embodiments, the pulse width of the first phase synchronization signal is the same as the pulse width of the second phase synchronization signal, in this way, during system design, the setting of transceivers of the phase synchronization signals may be simplified, thereby reducing the complexity of the system design.

S303: According to the carrier frequency and the pulse width, transmitting, by the first radar the radar signal to the target object and the first phase synchronization signal to the second radar.

Here, the first radar transmits, according to the pulse width of the first phase synchronization signal, the first phase synchronization signal to the second radar.

The above S301 to S303 realize that " transmitting, by the first radar the radar signal to the target object and the first phase synchronization signal to the second radar ", the first radar may determine the pulse widths of transmitting the radar signal and the first phase synchronization signal according to the distance between the two radars, and then, the second radar may receive the signal transmitted by the first radar, so that phase synchronization compensation may be performed on the received signal of the radar.

S304: A second phase synchronization signal transmitted by the second radar is received by the first radar.

S305: Phase synchronization compensation is performed on the received signal of the second radar at least according to the first phase synchronization signal and the second phase synchronization signal.

In the embodiments of the present specification, by determining the carrier frequency of the radar signal and the pulse widths of the phase synchronization signals, it can be ensured that the first radar and the second radar respectively receive the second phase synchronization signal and the first phase synchronization signal, so that phase synchronization compensation may be performed on the phase error generated during working of the two radars.

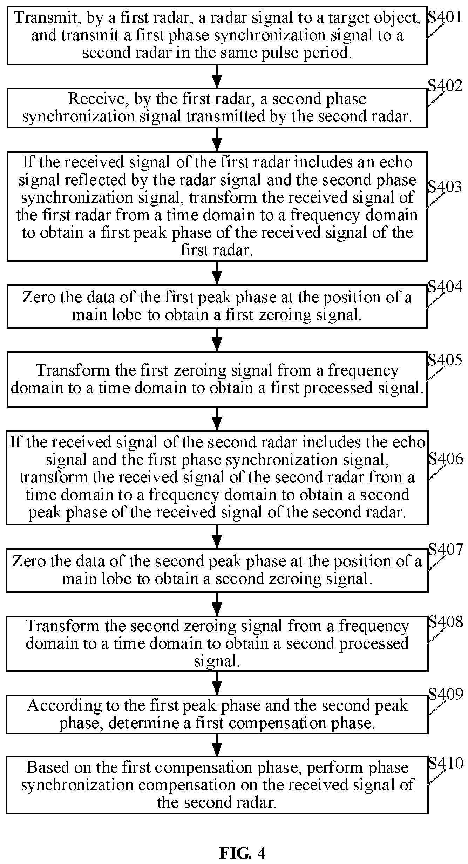

Some embodiments of the present specification provide a Bistatic SAR phase synchronization signal processing method based on carrier frequency signals. FIG. 4 shows another flowchart of implementation of a Bistatic SAR phase synchronization signal processing method based on carrier frequency signals according to the embodiment of the present specification. As shown in FIG. 4, the Bistatic SAR phase synchronization signal processing method based on carrier frequency signals includes the following operations:

S401: Transmitting, by a first radar a radar signal to a target object and a first phase synchronization signal to a second radar.

S402: A second phase synchronization signal transmitted by the second radar is received by the first radar.

S403: If the received signal of the first radar includes an echo signal reflected by the radar signal and the second phase synchronization signal, the received signal of the first radar is transformed from a time domain to a frequency domain to obtain a first peak phase of the received signal of the first radar.

Here, the received signal of the first radar and the received signal of the second radar are signals obtained through one transmission and reception respectively, and in transmitting and receiving processes, there is a phase error respectively, so it may be needed to perform phase compensation on the received signal of the second radar. When the received signal of the first radar includes an echo signal reflected by the radar signal and the second phase synchronization signal, since the received signal of the first radar is a point frequency signal, Fourier transform may be performed on the received signal of the first radar so as to transform the received signal of the first radar from a time domain to a frequency domain to obtain a first compressed signal, and then, a peak phase of the first compressed signal is extracted.

S404: The data of the first peak phase at the position of a main lobe is zeroed to obtain a first zeroing signal.

Here, before compensation for the phase, in order to eliminate the influence of the introduced synchronization signal on an imaging operation, it may be needed to perform a zeroing operation on the data at the position of the main lobe of the peak of the signal after Fourier transform.

S405: The first zeroing signal is transformed from a frequency domain to a time domain to obtain a first processed signal.

Here, inverse Fourier transform is performed on the first zeroing signal so as to transform the first zeroing signal from a frequency domain to a time domain to obtain a first processed signal.

Thus, transformation between a time domain and a frequency domain is performed on the received signal of the first radar to convert a complicated received signal into a signal easy to process, so as to improve the efficiency of phase compensation.

S406: If the received signal of the second radar includes the echo signal and the first phase synchronization signal, the received signal of the second radar is transformed from a time domain to a frequency domain to obtain a second peak phase of the received signal of the second radar.

Here, when the received signal of the second radar includes the echo signal reflected by the radar signal and the first phase synchronization signal, Fourier transform is performed on the received signal of the second radar so as to transform the received signal of the second radar from a time domain to a frequency domain to obtain a second compressed signal, and then, a peak phase of the second compressed signal is extracted.

S407: The data of the second peak phase at the position of a main lobe is zeroed to obtain a second zeroing signal.

Here, before compensation for the phase, in order to eliminate the influence of the introduced synchronization signal on an imaging operation, it may be needed to perform a zeroing operation on the data at the position of the main lobe of the peak of the signal after Fourier transform.

S408: The second zeroing signal is transformed from a frequency domain to a time domain to obtain a second processed signal.

Here, inverse Fourier transform is performed on the second zeroing signal so as to transform the second zeroing signal from a frequency domain to a time domain to obtain a second processed signal.

Thus, transformation between a time domain and a frequency domain is performed on the received signal of the second radar to convert a complicated received signal into a signal easy to process, so as to improve the efficiency of phase compensation of the received signal.

S409: According to the first peak phase and the second peak phase, a first compensation phase is determined.

Here, the difference of peak phases, namely the peak phase difference, between the first peak phase and the second peak phase is determined, and 1/2 of the peak phase difference is determined as a first compensation phase.

S410: Based on the first compensation phase, phase synchronization compensation is performed on the received signal of the second radar.

Here, in the Bistatic SAR system, the first radar as a master satellite is responsible for transmitting radar signals, the second radar as a slave satellite does not transmit radar signals, and the second radar transmits phase synchronization signals, so that phase synchronization compensation may be performed on the received signal of the second radar according to the compensation phase.

In some achievable embodiments, phase synchronization compensation may also be performed on the received signal of the second radar in the following mode.

Operation 1: Interpolation is performed on the first compensation phase to obtain a second compensation phase.

Here, interpolation is performed on the obtained first compensation phase, wherein the number of interpolation points is determined by the number of azimuth points of the second processed signal, and a second compensation phase is obtained.

Operation 2: Based on the second compensation phase, phase adjustment is performed on the second processed signal to implement phase synchronization compensation on the second processed signal.

Here, the second compensation phase and function corresponding to the second processed signal are multiplied to perform phase adjustment on the second processed signal, thereby implementing phase synchronization compensation on the second processed signal.

Thus, transformation between a time domain and a frequency domain is performed on the received signal of the radar to convert the original received signal into a signal easy to process, so as to improve the efficiency of phase compensation and improve the accuracy of phase compensation.

In some embodiments of the present specification, by performing signal processing on the received signal of the first radar and the received signal of the second radar, including the phase synchronization signals, the phase errors of the phase synchronization signals may be reduced, and phase synchronization of echo signals in the Bistatic SAR system may be implemented.

In some embodiments, after S410, the method further includes the following processes:

a third processed signal obtained by performing phase synchronization compensation on the second processed signal is determined; and based on the first processed signal and the third processed signal, imaging processing is performed on the target object to obtain an imaging result.

Here, according to the third processed signal obtained by performing phase synchronization compensation on the second processed signal and the first processed signal after compressing and zeroing, imaging processing is performed on the target object, and an imaging result of the target object may be obtained.

Some embodiments of the present specification provide a Bistatic SAR phase synchronization signal processing method based on carrier frequency signals, applied to a Bistaitc SAR system. The Bistatic SAR phase synchronization signal processing method based on carrier frequency signals is implemented through the following operations:

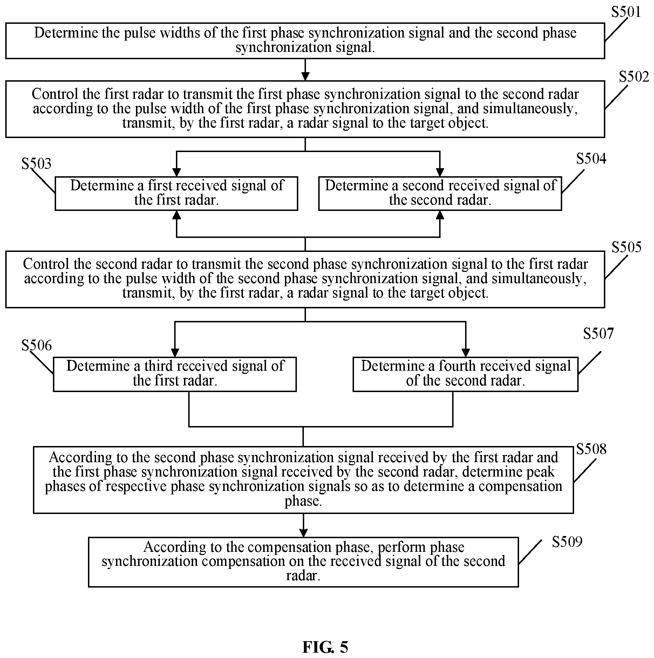

Here, the first radar (master satellite) is responsible for transmitting a radar signal to a target object, and the first radar (master satellite) and the second radar (slave satellite) simultaneously receive echo signals and mutually transmit and receive phase synchronization signals of the other party. FIG. 5 shows another flowchart of implementation of a Bistatic SAR phase synchronization signal processing method based on carrier frequency signals according to some embodiments of the present specification. With reference to FIG. 5, the Bistatic SAR phase synchronization signal processing method based on carrier frequency signals is described as follows:

S501: The pulse width of the first phase synchronization signal and the second phase synchronization signal are determined.

Here, the pulse width of the first phase synchronization signal is the same as the pulse width of the second phase synchronization signal.

S502: The first radar is controlled to transmit the first phase synchronization signal to the second radar according to the pulse width of the first phase synchronization signal, and simultaneously, a radar signal is transmitted, by the first radar, to the target object.

Here, during the first pulse repetition time (PRT), the Bistatic SAR system controls the first radar to transmit the first radar signal to the target object, and simultaneously controls the first radar to transmit the first phase synchronization signal to the second radar.

S503: A first received signal of the first radar is determined.

Here, the first radar receives an echo signal to obtain a first echo received signal to form a first received signal.

S504: A second received signal of the second radar is determined.

Here, the second radar receives an echo signal to obtain a second echo received signal and simultaneously receives a first phase synchronization signal, and the first phase synchronization signal and the second echo received signal form a second received signal. The execution order of S503 and S504 may not be sequential.

S505: The second radar is controlled to transmit the second phase synchronization signal to the first radar according to the pulse width of the second phase synchronization signal, and simultaneously, a radar signal is transmitted, by the first radar, to the target object.

Here, during the second pulse repetition time (PRT2), the Bistatic SAR system controls the first radar to transmit the second radar signal to the target object, and simultaneously controls the second radar to transmit the second phase synchronization signal to the first radar.

S506: A third received signal of the first radar is determined.

Here, during the second PRT, the first radar receives an echo signal reflected by the second radar signal to obtain a third echo received signal and simultaneously receives a second phase synchronization signal, and the third echo received signal and the second phase synchronization signal together form a third received signal of the first radar.

S507: A fourth received signal of the second radar is determined.

Here, during the second PRT, the second radar receives an echo signal reflected by the second radar signal to obtain a fourth echo received signal to form a fourth received signal.

In some embodiments, the first received signal and the third received signal of the first radar form the received signal of the first radar, and the second received signal and the fourth received signal of the second radar form the received signal of the second radar.

S508: According to the second phase synchronization signal received by the first radar and the first phase synchronization signal received by the second radar, peak phases of respective phase synchronization signals are determined so as to determine a compensation phase.

S509: According to the compensation phase, phase synchronization compensation is performed on the received signal of the second radar.

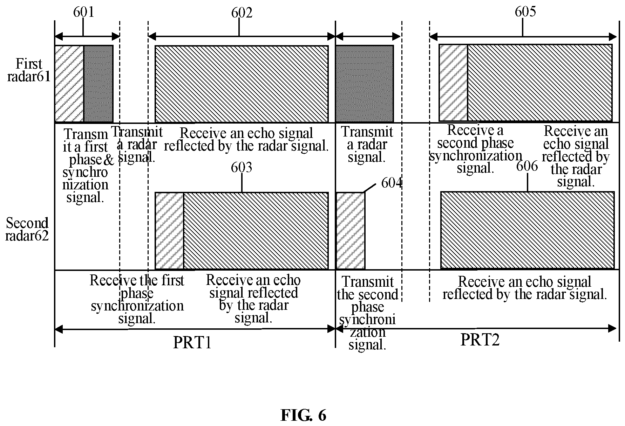

Corresponding to the above operations of signal transmission and reception, some embodiments of the present specification provide a corresponding time sequence diagram of transmitting and receiving signals by a first radar and a second radar. FIG. 6 shows a time sequence diagram of transmitting and receiving signals by a first radar and a second radar according to some embodiments of the present specification. With reference to FIG. 6, 601 means that during the PRT1, a first radar 61 transmits a radar signal and a first phase synchronization signal (corresponding to S502); 602 means that the first radar 61 receives an echo signal reflected by the radar signal (corresponding to S503); 603 means that a second radar 62 receives the echo signal and the first phase synchronization signal (corresponding to S504); 604 means that during the PRT2, the second radar 62 transmits a second phase synchronization signal to the first radar 61, and the first radar 61 transmits a radar signal (corresponding to S505); 605 means that the first radar 61 receives the second phase synchronization signal and the echo signal (corresponding to S506); and 606 means that the second radar 62 receives the echo signal (corresponding to S507).

In a specific example, both the first radar (master satellite) and the second radar (slave satellite) have a sampling rate of 60MHz and a carrier frequency of 1.2GHz. The radar signal transmitted by the first radar is a chirp of negative frequency modulation with a pulse width of 40μs and a band width of 50MHz, the first phase synchronization signal transmitted by the first radar is a sinusoidal signal with a frequency of 1.2GHz, and the second phase synchronization signal transmitted by the second radar is a sinusoidal signal with a frequency of 1.2GHz. This example will be described with the contents of the embodiments of the present specification below.

(1) Operation 1: A first radar and a second radar transmit and receive signals.

Assuming that there is a point target in a scene and its backscattering coefficient is set to 1, one or more echo signals of the point target are received by a first radar and a second radar to obtain a first echo signal and a second echo signal. The first radar transmits a first phase synchronization signal, and the second radar receives the first phase synchronization signal transmitted by the first radar to obtain a second synchronization received signal; and the second radar transmits a second phase synchronization signal, and the first radar receives the second phase synchronization signal transmitted by the second radar to obtain a first synchronization received signal. The time sequence diagram of signal transmission and reception of the SAR system is as shown in FIG. 6.

The first radar simultaneously stores the first echo received signal and the first synchronization received signal to obtain a received signal $S_{10}$ of the first radar; and the second radar simultaneously stores the second echo received signal and the second synchronization received signal to obtain a received signal $S_{20}$ of the second radar.

(2) Operation 2: Phase synchronization compensation is performed on the received signal of the second radar.

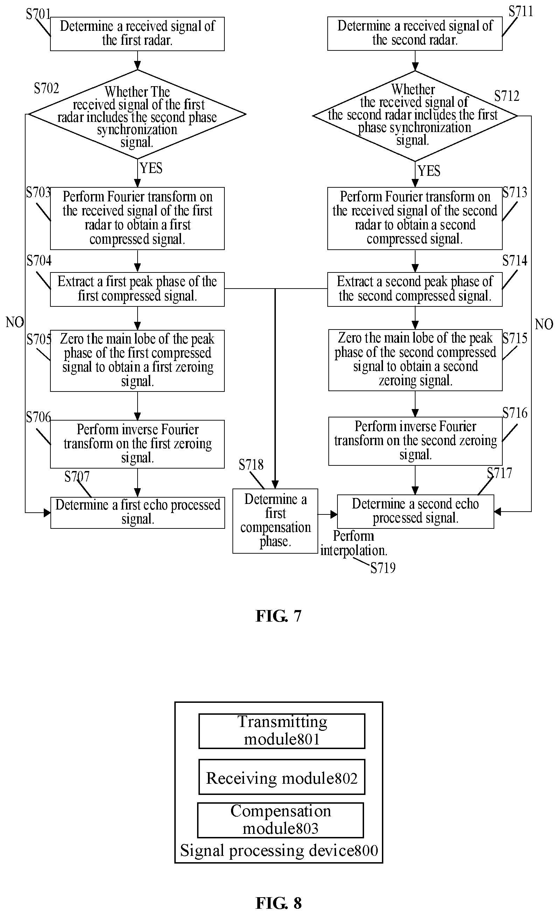

Some embodiments of the present specification provide a flowchart of a phase compensation algorithm. FIG. 7 shows a flowchart of a phase compensation algorithm according to some embodiments of the present specification. With reference to FIG. 7:

S701: The received signal of the first radar is determined.

S702: Whether the received signal of the first radar includes a second phase synchronization signal is determined, wherein if the received signal of the first radar includes the second phase synchronization signal, S703 is executed, and if the received signal of the first radar does not include the second phase synchronization signal, S707 is executed.

Here, according to the time sequence relationship of the pulse repetition time, whether the received signal $S_{10}$ of the first radar includes a first synchronization received signal is judged. If the $S_{10}$ does not include the first synchronization received signal, the $S_{10}$ is directly taken as a first echo processing signal. If the $S_{10}$ includes the first synchronization received signal, signal processing is performed on the $S_{10}$.

S703: Fourier transform is performed on the received signal of the first radar to obtain a first compressed signal.

Here, because the first synchronization received signal in the received signal of the first radar is a point frequency signal, Fourier transform is directly performed on the signal $S_{10}$ to obtain a first compressed signal $S_{11}$, as shown in formula (1):

$$S_{11} = fft(S_{10}) \quad (1)$$

wherein fft represents Fourier transform.

S704: A first peak phase of the first compressed signal is extracted.

Here, a peak phase $\varphi_1$ of the first compressed signal $S_{11}$ is extracted.

S705: The main lobe of the peak phase of the first compressed signal is zeroed to obtain a first zeroing signal.

Here, the data of the peak phase of the $S_{11}$ at the position of a main lobe is zeroed to obtain a first zeroing signal $S_{12}$.

S706: Inverse Fourier transform is performed on the first zeroing signal.

Here, inverse Fourier transform is performed on the first zeroing signal so as to transform the first zeroing signal $S_{12}$ to a time domain, thereby obtaining a first echo processing signal $S_{13}$, as shown in formula (2):

$$S_{13} = ifft(S_{12}) \quad (2)$$

wherein ifft represents inverse Fourier transform.

S707: A first echo processing signal is determined.

S711: A received signal of the second radar is determined.

S712: Whether the received signal of the second radar includes a first phase synchronization signal is determined, wherein if the received signal of the second radar includes the first phase synchronization signal, S713 is executed, and if the received signal of the second radar does not include the first phase synchronization signal, S717 is executed.

Here, according to the time sequence relationship of the pulse repetition time, whether the received signal $S_{20}$ of the second radar includes a second synchronization received signal is judged. If the $S_{20}$ does not include the second synchronization received signal, the $S_{20}$ is directly taken as a second echo processing signal. If the $S_{20}$ includes the second synchronization received signal, signal transformation is performed on the $S_{20}$.

S713: Fourier transform is performed on the received signal of the second radar to obtain a second compressed signal.

Here, because the second synchronization received signal in the received signal of the second radar is a point frequency signal, Fourier transform may be directly performed on the signal $S_{20}$ to obtain a second compressed signal $S_{21}$, as shown in formula (3):

$$S_{21} = fft(S_{20}) \quad (3)$$

S714: A second peak phase of the second compressed signal is extracted.

Here, a peak phase $\varphi_2$ of the second compressed signal $S_{21}$ is extracted.

S715: The main lobe of the peak phase of the second compressed signal is zeroed to obtain a second zeroing signal.

Here, the data of the peak phase $\varphi_2$ at the position of a main lobe is zeroed to obtain a second zeroing signal $S_{22}$.

S716: Inverse Fourier transform is performed on the second zeroing signal.

Here, inverse Fourier transform is performed on the second zeroing signal so as to transform the second zeroing signal $S_{22}$ to a time domain, thereby obtaining a second echo processing signal $S_{23}$, as shown in formula (4):

$$S_{23} = ifft(S_{22}) \quad (4)$$

S717: A second echo processing signal is determined.

S718: A first compensation phase is determined.

Here, based on the first peak phase and the second peak phase, a first compensation phase $\varphi_3$ may be determined. The specific formula of the first compensation phase $\varphi_3$ is as shown in formula (5):

$$\varphi_3 = \frac{1}{2}\left(\varphi_1 - \varphi_2\right) \quad (5)$$

S719: Interpolation is performed on the first compensation phase.

Interpolation is performed on the first compensation phase $\varphi_3$ to obtain a second compensation phase $\varphi_3'$, and the second compensation phase $\varphi_3'$ after interpolation is compensated into the second echo processing signal $S_{23}$ to obtain a third echo processing signal $S_{23}'$, as shown in formula (6):

$$S_{23}' = S_{23} \cdot \exp(j\varphi_3') \quad (6)$$

After the above operations, imaging processing is performed on the target object by adopting the first echo processing signal $S_{13}$ and the third echo processing signal $S_{23}'$ to obtain an imaging result of the target object.

In some embodiments of the present specification, the first radar simultaneously transmits the radar signal and the first phase synchronization signal with the same carrier frequency, the second radar transmits the second phase synchronization signal with the same carrier frequency to the first radar, and phase compensation is performed on the received signals of the first radar and the second radar according to the synchronization signals, thereby simplifying the design complexity of the radar system, reducing the phase error of the phase synchronization signals, and implementing phase synchronization of echo signals in the Bistatic SAR system.

Some embodiments of the present specification provides a Bistatic SAR phase synchronization signal processing device based on carrier frequency signals. FIG. 8 shows a structural schematic diagram of a Bistatic SAR phase synchronization signal processing device based on carrier frequency signals according to some embodiments of the present specification. As shown in FIG. 8, the device 800 includes a transmitting module 801, a receiving module 802 and a compensation module 803, wherein

the transmitting module 801 is configured to transmit, by a first radar a radar signal to a target object and a first phase synchronization signal to a second radar, wherein the carrier frequency of the radar signal is the same as the carrier frequency of the first phase synchronization signal;

the receiving module 802 is configured to receive, by the first radar, a second phase synchronization signal transmitted by the second radar; and

the compensation module 803 is configured to perform phase synchronization compensation on the received signal of the second radar at least according to the first phase synchronization signal and the second phase synchronization signal.

In the above device, the transmitting module 801 includes:

a first determining sub-module configured to determine the carrier frequency of the radar signal;

a second determining sub-module configured to determine the pulse width of the first phase synchronization signal and the second phase synchronization signal; and

a first transmitting sub-module configured to transmit, by the first radar, the radar signal to the target object according to the carrier frequency and the pulse width, and transmit the first phase synchronization signal to the second radar.

In the above device, the compensation module 803 includes:

a first transformation sub-module configured to transform the received signal of the first radar from a time domain to a frequency domain to obtain a first peak phase of the received signal of the first radar if the received signal of the first radar includes the echo signal reflected by the radar signal and the second phase synchronization signal;

a second transformation sub-module configured to transform the received signal of the second radar from a time domain to a frequency domain to obtain a second peak phase of the received signal of the second radar if the received signal of the second radar includes the echo signal and the first phase synchronization signal;

a third determining sub-module configured to determine a first compensation phase according to the first peak phase and the second peak phase; and

a compensation sub-module configured to perform phase synchronization compensation on the received signal of the second radar based on the first compensation phase.

In the above device, the compensation module 803 further includes:

a first zeroing sub-module configured to zero the data of the first peak phase at the position of a main lobe to obtain a first zeroing signal; and

a third transformation sub-module configured to transform the first zeroing signal from a frequency domain to a time domain to obtain a first processed signal.

In the above device, the compensation module 803 further includes:

a second zeroing sub-module configured to zero the data of the second peak phase at the position of a main lobe to obtain a second zeroing signal; and

a fourth transformation sub-module configured to transform the second zeroing signal from a frequency domain to a time domain to obtain a second processed signal.

In the above device, the compensation sub-module includes:

an interpolation unit configured to perform interpolation on the first compensation phase to obtain a second compensation phase; and

a phase adjustment unit configured to perform phase adjustment on the second processed signal based on the second compensation phase to implement phase synchronization compensation on the second processed signal.

In the above device, the compensation sub-module includes:

a determining unit configured to determine a third processed signal obtained by performing phase synchronization compensation on the second processed signal; and

an imaging processing unit configured to perform imaging processing on the target object based on the first processed signal and the third processed signal to obtain an imaging result.

Some embodiments of the present specification further provide Bistatic SAR phase synchronization signal processing equipment based on carrier frequency signals. All modules included in the equipment and all sub-modules and units included in the modules may be implemented by a processor in a terminal and may also be implemented by a specific logic circuit. In implementation processes, the processor may be a Central Processing Unit (CPU), a Microprocessor (MPU), a Digital Signal Processor (DSP), or a Field Programmable Gate Array (FPGA).

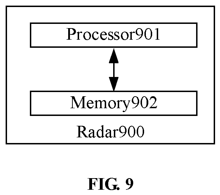

Some embodiments of the present specification provide a radar. FIG. 9 shows a schematic diagram of composition structures of the radar according to some embodiments of the present specification. As shown in FIG. 9, the radar 900 at least includes a processor 901, a memory 902 and executable programs which are stored on the memory and can be executed by the processor, wherein

the processor 901 may execute the executable programs, and the executable programs are configured to implement the Bistatic SAR phase synchronization signal processing method based on carrier frequency signals.

Correspondingly, some embodiments of the present specification provide a computer storage medium in which computer executable instructions are stored. The computer executable instructions are configured to execute the Bistatic SAR phase synchronization signal processing methods based on carrier frequency signals according to other embodiments in the present specification.

It should be noted that in the disclosure, the terms "include", "contain" or any other variants thereof are intended to cover non-exclusive inclusions, so that a process, method, article or device including a series of elements includes not only those elements, but also other elements that are not explicitly listed, or further includes elements inherent to such process, method, article or device. Without more restrictions, the element defined by the sentence "include one ..." does not exclude that there are other identical elements in the process, method, article or device including the element.

The serial numbers of the above embodiments of the present specification are merely for description, and do not represent the superiority or inferiority of the embodiments.

Through the description of the above embodiments, those skilled in the art can clearly understand that the methods in the above embodiments may be implemented by means of software and a necessary general hardware platform, and may also be implemented by hardware. However, in many cases, the former is the better embodiment. Based on this understanding, the technical solution of the present specification or a part that contributes to the existing technology may be embodied in a form of software products. The computer software product is stored in a storage medium (such as a Read Only Memory (ROM)/Random Access Memory (RAM), a magnetic disk, or an optical disk), and includes several instructions configured to enable a terminal device (such as a mobile phone, a computer, a server, or the like) to execute the method described in each embodiment of the present specification.

The present specification is described with reference to flow diagrams and/or block diagrams of methods, terminals (systems) and computer program products according to the embodiments of the present specification. It should be understood that each flow and/or block in flow diagrams and/or block diagrams and a combination of flows and/or blocks in flow diagrams and/or block diagrams may be implemented by computer program instructions. These computer program instructions may be provided to a processor of a general-purpose computer, a special-purpose computer, an embedded processing machine or other programmable data processing terminals to generate a machine, so that the instructions executed by the processor of a computer or other programmable data processing terminals generate a device configured to implement the functions specified in one flow or multiple flows in flow diagrams and/or one block or multiple blocks in block diagrams.

These computer program instructions may also be stored in a computer-readable memory that can guide a computer or other programmable data processing terminals to work in a specific mode, so that the instructions stored in the computer-readable memory generate a manufactured product including an instruction device, and the instruction device implements the functions specified in one flow or multiple flows in flow diagrams and/or one block or multiple blocks in block diagrams.

These computer program instructions may also be loaded onto a computer or other programmable data processing terminals, so that a series of operation steps are performed on the computer or other programmable terminals to generate computer-implemented processing, and then, the instructions executed on the computer or other programmable terminals provide steps for implementing the functions specified in one flow or multiple flows in flow diagrams and/or one block or multiple blocks in block diagrams.

The above embodiments are only the exemplary embodiments of the present specification, and do not limit the claims of the present specification.

## Claims

1. A Bistatic Synthetic Aperture Radar, SAR, phase synchronization signal processing method, comprising:

> transmitting, by a first radar at a same time, a radar signal to a target object and a first phase synchronization signal to a second radar, wherein a carrier frequency of the radar signal is the same as that of the first phase synchronization signal;
> receiving, by the first radar, a second phase synchronization signal transmitted by the second radar (S102); and
> performing, at least according to the first phase synchronization signal and the second phase synchronization signal, phase synchronization compensation on the received signal of the second radar (S103),
> wherein the performing, at least according to the first phase synchronization signal and the second phase synchronization signal, phase synchronization compensation on the received signal of the second radar (S103) comprises:

>> performing phase adjustment on a received signal of the first radar and the received signal of the second radar, wherein the received signal of the first radar at least comprises the second phase synchronization signal, and the received signal of the second radar at least comprises the first phase synchronization signal; and
>> performing, according to a compensation phase obtained by phase adjustment, phase synchronization compensation on the received signal of the second radar.

2. The method of claim 1, wherein the transmitting, by a first radar at the same time, a radar signal to a target object and a first phase synchronization signal to a second radar comprises:

> determining the carrier frequency of the radar signal (S301);
> determining pulse width of the first phase synchronization signal and the second phase synchronization signal (S302); and
> transmitting, by the first radar at the same time, according to the carrier frequency and the pulse width, the radar signal to the target object and the first phase synchronization signal to the second radar.

## Patentansprüche

1. Verfahren zur Verarbeitung von Phasensynchronisationssignalen eines bistatischen Radars mit synthetischer Apertur, SAR, umfassend:

Senden eines Radarsignals an ein Targetobjekt und eines ersten Phasensynchronisationssignals an ein zweites Radar durch ein erstes Radar zu einer gleichen Zeit, wobei eine Carrierfrequenz des Radarsignals die gleiche ist wie die des ersten Phasensynchronisationssignals; Empfangen eines zweiten Phasensynchronisationssignals, das von dem zweiten Radar (S102) gesendet wird, durch das erste Radar; und Durchführen einer Phasensynchronisationskompensation an dem empfangenen Signal des zweiten Radars (S103) zumindest gemäß dem ersten Phasensynchronisationssignal und dem zweiten Phasensynchronisationssignal, wobei das Durchführen einer Phasensynchronisationskompensation an dem empfangenen Signal des zweiten Radars (S103) zumindest gemäß dem ersten Phasensynchronisationssignal und dem zweiten Phasensynchronisationssignal umfasst:

> Durchführen einer Phasenanpassung an einem empfangenen Signal des ersten Radars und dem empfangenen Signal des zweiten Radars, wobei das empfangene Signal des ersten Radars mindestens das zweite Phasensynchronisationssignal umfasst, und das empfangene Signal des zweiten Radars mindestens das erste Phasensynchronisationssignal umfasst; und Durchführen einer Phasensynchronisationskompensation an dem empfangenen Signal des zweiten Radars gemäß einer Kompensationsphase, die durch Phasenanpassung erhalten ist.

**2.** Verfahren gemäß Anspruch 1, wobei das Senden eines Radarsignals an ein Targetobjekt und eines ersten Phasensynchronisationssignals an ein zweites Radar durch ein erstes Radar zu der gleichen Zeit umfasst:

> Bestimmen der Carrierfrequenz des Radarsignals (S301);
> Bestimmen der Pulsbreite des ersten Phasensynchronisationssignals und des zweiten Phasensynchronisationssignals (S302); und
> Senden des Radarsignals an das Zielobjekt und des ersten Phasensynchronisationssignals an das zweite Radar durch das erste Radar zu der gleichen Zeit, gemäß der Carrierfrequenz und der Pulsbreite.

## Revendications

**1.** Procédé de traitement de signal de synchronisation de phase de radar à synthèse d'ouverture, SAR, bistatique, comprenant :

> l'émission, par un premier radar au même instant, d'un signal radar vers un objet cible et d'un premier signal de synchronisation de phase vers un deuxième radar, dans lequel une fréquence de porteuse du signal radar est identique à celle du premier signal de synchronisation de phase ;
> la réception, par le premier radar, d'un deuxième signal de synchronisation de phase émis par le deuxième radar (S102) ; et
> la réalisation, au moins en fonction du premier signal de synchronisation de phase et du deuxième signal de synchronisation de phase, d'une compensation de synchronisation de phase sur le signal reçu du deuxième radar (S103), dans lequel la réalisation, au moins en fonction du premier signal de synchronisation de phase et du deuxième signal de synchronisation de phase, d'une compensation de synchronisation de phase sur le signal reçu du deuxième radar (S103) comprend :

>> la réalisation d'un ajustement de phase sur un signal reçu du premier radar et le signal reçu du deuxième radar, dans lequel le signal reçu du premier radar comprend au moins le deuxième signal de synchronisation de phase, et le signal reçu du deuxième radar comprend au moins le premier signal de synchronisation de phase ; et
>> la réalisation, en fonction d'une phase de compensation obtenue par ajustement de phase, d'une compensation de synchronisation de phase sur le signal reçu du deuxième radar.

**2.** Procédé selon la revendication 1, dans lequel l'émission, par un premier radar au même instant, d'un signal radar vers un objet cible et d'un premier signal de synchronisation de phase vers un deuxième radar comprend :

> la détermination de la fréquence de porteuse du signal radar (S301) ;
> la détermination de la largeur d'impulsion du premier signal de synchronisation de phase et du deuxième signal de synchronisation de phase (S302) ; et
> l'émission, par le premier radar au même instant, en fonction de la fréquence de porteuse et de la largeur d'impulsion, du signal radar vers l'objet cible et du premier signal de synchronisation de phase vers le deuxième radar.

Transmit, by a first radar in the same pulse period, a radar signal to a target object and a first phase synchronization signal to a second radar.

S101

Receive, by the first radar, a second phase synchronization signal transmitted by the second radar.

S102

Perform phase synchronization compensation on the received signal of the second radar at least according to the first phase synchronization signal and the second phase synchronization signal.

S103

**FIG. 1**

Carrier frequency signal 201

First phase synchronization signal 202

Radar signal 203

Chirp signal 204

**FIG. 2**

Determine the carrier frequency of the radar signal. — S301

Determine the pulse width of the first phase synchronization signal and the second phase synchronization signal. — S302

According to the carrier frequency and the pulse width, transmit, by the first radar in the same pulse period, the radar signal to the target object and the first phase synchronization signal to the second radar. — S303

Receive, by the first radar, a second phase synchronization signal transmitted by the second radar. — S304

Perform phase synchronization compensation on the received signal of the second radar at least according to the first phase synchronization signal and the second phase synchronization signal. — S305

**FIG. 3**

Transmit, by a first radar, a radar signal to a target object, and transmit a first phase synchronization signal to a second radar in the same pulse period. S401

Receive, by the first radar, a second phase synchronization signal transmitted by the second radar. S402

If the received signal of the first radar includes an echo signal reflected by the radar signal and the second phase synchronization signal, transform the received signal of the first radar from a time domain to a frequency domain to obtain a first peak phase of the received signal of the first radar. S403

Zero the data of the first peak phase at the position of a main lobe to obtain a first zeroing signal. S404

Transform the first zeroing signal from a frequency domain to a time domain to obtain a first processed signal. S405

If the received signal of the second radar includes the echo signal and the first phase synchronization signal, transform the received signal of the second radar from a time domain to a frequency domain to obtain a second peak phase of the received signal of the second radar. S406

Zero the data of the second peak phase at the position of a main lobe to obtain a second zeroing signal. S407

Transform the second zeroing signal from a frequency domain to a time domain to obtain a second processed signal. S408

According to the first peak phase and the second peak phase, determine a first compensation phase. S409

Based on the first compensation phase, perform phase synchronization compensation on the received signal of the second radar. S410

**FIG. 4**

Determine the pulse widths of the first phase synchronization signal and the second phase synchronization signal. — S501

Control the first radar to transmit the first phase synchronization signal to the second radar according to the pulse width of the first phase synchronization signal, and simultaneously, transmit, by the first radar, a radar signal to the target object. — S502

S503 — Determine a first received signal of the first radar.

Determine a second received signal of the second radar. — S504

Control the second radar to transmit the second phase synchronization signal to the first radar according to the pulse width of the second phase synchronization signal, and simultaneously, transmit, by the first radar, a radar signal to the target object. — S505

S506 — Determine a third received signal of the first radar.

Determine a fourth received signal of the second radar. — S507

According to the second phase synchronization signal received by the first radar and the first phase synchronization signal received by the second radar, determine peak phases of respective phase synchronization signals so as to determine a compensation phase. — S508

According to the compensation phase, perform phase synchronization compensation on the received signal of the second radar. — S509

**FIG. 5**

601    602    605

First
radar61

Transm Transmit    Receive an echo signal    Transmit    Receive a         Receive an
it a first  a radar  reflected by the radar signal.  a radar    second phase      echo signal
phase &  signal.                          signal.    synchronization   reflected by
synchro                                              signal.    606    the radar
nization            603                                                 signal.
signal.                                                    604

Second
radar62

Receive the first   Receive an echo     Transmit         Receive an echo signal
phase        signal reflected    the second       reflected by the radar signal.
synchronization     by the radar       phase
signal.         signal.       synchroni
zation
signal.

PRT1                                              PRT2

FIG. 6

S701 — Determine a received signal of the first radar.

S702 — Whether The received signal of the first radar includes the second phase synchronization signal.

YES

S703 — Perform Fourier transform on the received signal of the first radar to obtain a first compressed signal.

S704 — Extract a first peak phase of the first compressed signal.

NO

S705 — Zero the main lobe of the peak phase of the first compressed signal to obtain a first zeroing signal.

S706 — Perform inverse Fourier transform on the first zeroing signal.

S707 — Determine a first echo processed signal.

S711 — Determine a received signal of the second radar.

S712 — Whether the received signal of the second radar includes the first phase synchronization signal.

YES

S713 — Perform Fourier transform on the received signal of the second radar to obtain a second compressed signal.

S714 — Extract a second peak phase of the second compressed signal.

NO

S715 — Zero the main lobe of the peak phase of the second compressed signal to obtain a second zeroing signal.

S716 — Perform inverse Fourier transform on the second zeroing signal.

S717 — Determine a second echo processed signal.

S718 — Determine a first compensation phase.

Perform interpolation.

S719

**FIG. 7**

Transmitting module801

Receiving module802

Compensation module803

Signal processing device800

**FIG. 8**

17

```
┌─────────────────────────────┐
│  ┌───────────────────────┐  │
│  │     Processor901      │  │
│  └───────────────────────┘  │
│             ↕               │
│  ┌───────────────────────┐  │
│  │      Memory902        │  │
│  └───────────────────────┘  │
│         Radar900            │
└─────────────────────────────┘
```

**FIG. 9**

**EP 3 865 908 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019285742 A1
- US 2018313951 A1
- CN 110488285 A